# EUROPEAN PATENT APPLICATION

(11) **EP 1 075 870 A1**
(43) Date of publication of application: **14.02.2001**
(21) Application number: 00905296.0
(22) Date of filing: 23.02.2000
(51) Int. Cl.: B01J 27/057, B01J 29/068, B01J 29/44, B01D 53/94, F01N 3/10

(54) **CATALYST FOR REMOVING NITROGEN OXIDES AND METHOD FOR REMOVING NITROGEN OXIDES**

(30) Priority: 23.02.1999 JP 4493399
(71) Applicant: NIKKI CHEMICAL CO., LTD., Yokohama-shi, Kanagawa 233-8550 (JP)
(72) Inventor: TANAKA, Satoshi, Nikki Chemical Co., Ltd, Niitsu-shi, Niigata 956-0855 (JP); FUNAYAMA, Yumiko, Nikki Chemical Co., Ltd, Niitsu-shi, Niigata 956-0855 (JP); KIJIMA, Yoshiyuki, Nikki Chemical Co., Ltd, Niitsu-shi, Niigata 956-0855 (JP)
(74) Representative: Modiano, Guido, Dr.-Ing.
(86) International application number: JP0001039
(87) International publication number: WO0050169

(57) **Abstract**

A catalyst having a nitrogen oxide-removing activity (DeNOx activity) in a low-temperature region of from 200 to 350°C, a method for removing nitrogen oxides using the catalyst, and a method for keeping the DeNOx activity in a wide temperature region of from 200 to 600°C are provided. The low-temperature-active catalyst is obtained by adding tellurium to a platinum-based catalyst and further adding thereto a zeolite and/or at least one kind of element selected from alkali metals, alkaline earth metals, boron, zinc, phosphorus, tungsten, molybdenum, tin and cerium. The DeNOx activity in the region of from low-temperature to high-temperature is achieved by combining the catalyst with an Ag- or Cu-based catalyst having a high activity at 300°C and higher.

## Description

### Technical Field

This invention relates to a catalyst for removing nitrogen oxides (DeNOx catalyst) and a method for removing nitrogen oxides using the catalyst. More particularly, they are utilized for purifying exhaust gases discharged from a diesel engine, and specifically for purifying exhaust gases from diesel engine automobiles such as a truck and a bus and from independent electric power plants using a diesel engine.

### Background Art

Since a diesel engine has a high thermal efficiency and is economical as compared with a gasoline engine, the diesel engine is mainly used for large automobiles such as trucks and buses and independent power generating. However, because a diesel engine discharges a large amount of soot and nitrogen oxides (NOx), technologies for purifying the exhaust gases have been required.

A technology for removing NOx by reduction from combustion exhaust gases from a thermal power plant has been practically used. The method is the reduction of NOx into N₂ wherein an ammonia gas is added into the combustion exhaust gases and reacted with NOx on a catalyst. The method may be used in a factory equipped with a large apparatus and a special operation administrator; ammonia is however difficult to store, manage and handle, it is hard to utilize in automobiles and small-scale independent power plants.

In purifying exhaust gases from automobile diesel engines, the use of ammonia is avoided and instead, use of urea is proposed and a method of using ethanol as a reducing agent is under development. However, it is a difficulty to have to carry not only an automobile fuel but also the reducing agent which is more difficult to manage and handle than the fuel. Thus, it is preferred that the automobile fuel, i.e., a diesel fuel itself be utilized as a reducing agent for NOx.

However, because a diesel engine has a high fraction of excess air and discharges combustion exhaust gases of an oxygen concentration reaching 6 to 10%, the reducing agent for NOx is consumed by combustion and not effectively utilized for the reduction of NOx and, thus, needs a catalyst having a high selectivity developing. Furthermore, as loaded in an automobile, a purification apparatus is required to be as small in size as possible and thus demands a catalyst having a high activity.

Requirement of increasing the selectivity for reaction of a reducing agent with NOx and improving the nitrogen oxide removing activity (DeNOx activity) is a very difficult requirement. Although catalysts satisfying the requirement are reported in literature such as patents, no such catalysts have yet been loaded in a practical car.

On the other hand, the catalyst is required to have a DeNOx activity in a wide temperature range of from 200 to 600°C, but it is very difficult for a single kind of catalyst to satisfy the range. Thus, keeping the DeNOx activity in the wide temperature region has been attempted by combining a catalyst covering a low-temperature region and a catalyst covering a high-temperature region and, however, no such catalyst having the activity in the low-temperature region (from 200 to 350°C) has been present. For example, a Pt/Al₂O₃ catalyst and a Pt/TiO₂ catalyst have a DeNOx activity in low temperatures of about 200°C, but when the reaction temperature is raised to about 250°C, the combustion reaction of a reducing agent (hydrocarbon) preferentially occurs and thus the conversion ratio of NOx is lowered.

The present invention has been made for solving the above-described problems and it is an object of this invention to provide a catalyst having a DeNOx activity in a low-temperature region from 200 to 350°C, a method for removing of nitrogen oxides using the catalyst, and a method of keeping a DeNOx activity in a wide temperature region of from 200 to 600°C.

### Disclosure of the Invention

The present inventors previously made intensive studies in an attempt to inhibit the reducing-agent-burning activity of the Pt-based catalysts for removing nitrogen oxides such as the Pt/Al₂O₃ and Pt/TiO₂ catalysts and, as a result of their studies, found that adding tellurium (Te) to the Pt-based catalysts would inhibit the reducing-agent-burning activity of said catalysts and then filed a patent application about the resultant catalysts (Japanese Patent Application No. 276595 /1997).

This time the present inventors made further studies and, as a result, have found that, when the aforesaid Pt-Te-based catalysts are incorporated with a zeolite and/or one or more kinds of element selected from alkali metals, alkaline earth metals, boron, phosphorus, zinc, tungsten, molybdenum, tin and cerium, the catalysts thus obtained are enhanced in the selectivity in the above-described low temperature range and more improved in the DeNOx activity, and thus have accomplished the present invention.

That is, the 1st nitrogen-oxide-removing catalyst of this invention comprises platinum, tellurium, a refractory inorganic oxide and one or more kinds of the element selected from alkali metals, alkaline earth metals, boron, phosphorus, zinc, tungsten, molybdenum, tin and cerium.

Further, the 2nd nitrogen-oxide-removing catalyst of this invention comprises platinum, tellurium, a refractory inorganic oxide and a zeolite.

Furthermore, the 3rd nitrogen-oxide-removing catalyst of this invention comprises platinum, tellurium, a refractory inorganic oxide, a zeolite and one or more kinds of the element selected from alkali metals, alkaline earth metals, boron, phosphorus, zinc, tungsten, molybdenum, tin and cerium.

The method for removing nitrogen oxides of this invention comprises introducing a nitrogen oxide-containing gas and a reducing agent into a catalyst bed loaded with any of the above-described catalysts of this invention.

Furthermore, another method for removing nitrogen oxides of this invention comprises providing upstream of the catalyst bed loaded with any of the above-described catalysts of this invention, another catalyst bed loaded with a catalyst having a higher nitrogen-oxide-removing activity than the former catalyst at 300°C and higher; and flowing a nitrogen-oxide-containing gas and a reducing agent from the upstream catalyst bed to the downstream catalyst bed. This method is able to remove nitrogen oxides in a wide temperature range of from 200 to 600°C.

This invention will be described below in detail.

The 1st catalyst contains, as active components, platinum, tellurium and at least one kind of the element selected from alkali metals, alkaline earth metals, boron, phosphorus, zinc, tungsten, molybdenum, tin and cerium, these active components being carried on a refractory inorganic oxide.

The content of each of the active components based on the amount of the refractory inorganic oxide is as follows. The platinum content is preferably from 0.1 to 5% by weight and more preferably from 0.5 to 2% by weight, the tellurium content is preferably from 0.05 to 5% by weight and more preferably from 0.1 to 2% by weight, and the total content of the at least one kind of the element selected from alkali metals, alkaline earth metals, boron, phosphorus, zinc, tungsten, molybdenum, tin and cerium is preferably from 0.1 to 40% by weight and more preferably from 0.3 to 30% by weight.

The 2nd catalyst of this invention contains platinum, tellurium and a zeolite as active components and is a mixture of the zeolite and a refractory inorganic oxide carrying platinum and tellurium. The content of each of the active components is as follows. The platinum content is preferably from 0.1 to 5% by weight and more preferably from 0.5 to 2% by weight, and the tellurium content is preferably from 0.05 to 5% by weight and more preferably from 0.1 to 2% by weight, each being based on the amount of the refractory inorganic oxide. The content of the zeolite is preferably from 1 to 50% by weight and more preferably from 3 to 30% by weight based on the total amount of the catalyst.

The 3rd catalyst of this invention contains as active components, platinum, tellurium, a zeolite and at least one kind of the element selected from alkali metals, alkaline earth metals, boron, phosphorus, zinc, tungsten, molybdenum, tin and cerium. The 3rd catalyst is a mixture of the zeolite and a refractory inorganic oxide carrying platinum, tellurium and at least one kind of the element selected from alkali metals, alkaline earth metals, boron, phosphorus, zinc, tungsten, molybdenum, tin and cerium.

The content of each of the active components based on the amount of the refractory inorganic oxide is as follows. The platinum content is preferably from 0.1 to 5% by weight and more preferably from 0.5 to 2% by weight, the tellurium content is preferably from 0.05 to 5% by weight and more preferably from 0.1 to 2% by weight, and the total content of the at least one kind of the element selected from alkali metals, alkaline earth metals, boron, phosphorus, zinc, tungsten, molybdenum, tin and cerium is preferably from 0.1 to 40% by weight and more preferably from 0.3 to 30% by weight. The content of the zeolite is preferably from 1 to 50% by weight and more preferably from 3 to 30% by weight, based on the total amount of the catalyst.

Each of the above-described catalysts of this invention will be lowered in DeNOx activity when the content of platinum is less than 0.1% by weight and, on the other hand, even if it exceeds 5% by weight, they will not be so improved in DeNOx activity as to meet the increased amount.

Also, when the content of tellurium is less than 0.05% by weight or the content of the at least one kind of the element selected from alkali metals, alkaline earth metals, boron, phosphorus, zinc, tungsten, molybdenum, tin and cerium is less than 0.1% by weight, no addition effect thereof is seen. On the other hand, when the content of tellurium exceeds 5% by weight or the content of the latter exceeds 40% by weight, they may have a bad influence on performances of the catalysts, such as lowering the DeNOx activity, which is undesirable.

Furthermore, when the content of the zeolite is less than 1% by weight, no addition effect thereof is seen and, even if it exceeds 50% by weight, the addition effect thereof is almost the same as in the case of adding 50% by weight.

The refractory inorganic oxides used in this invention may be any ones which are usually used as carriers for a catalyst and include alumina, silica, titania, zirconia and compound oxides thereof such as silica-alumina, alumina-titania, alumina-zirconia and titania-zirconia, among which alumina is a preferred carrier.

There is no particular restriction on the method for preparing the DeNOx catalyst of this invention, which can be prepared by methods conventionally known.

For example, a preparation method for the 1st DeNOx catalyst of this invention comprises impregnating a refractory inorganic oxide with a mixed aqueous solution which contains water-soluble compounds of platinum, tellurium and the other active component(s) selected from alkali metals, etc., and then drying and calcining the resulting mixture at a temperature of from 300 to 600°C to thereby obtain the catalyst carrying the desired active components. In this case, any process may be employed which includes a process of depositing the active components on a powdered refractory inorganic oxide and then molding the whole into a desired form or a process of depositing the active components on a refractory inorganic oxide which has been molded into a desired form.

Alternatively, a refractory inorganic oxide is first impregnated with a mixed aqueous solution containing water-soluble compounds of platinum and tellurium and a water-soluble compound(s) of a part of the other active components selected from alkali metals, etc., followed by drying and calcining. The calcined product is then either mixed with a compound(s) of the remaining active component(s) or impregnated with an aqueous solution containing the remaining active component(s), dried and calcined, to thereby obtain the 1st catalyst of this invention.

The methods for preparing the 2nd and 3rd DeNOx catalysts containing a zeolite include a method wherein active components such as platinum and tellurium are first deposited on a refractory inorganic oxide, followed by mixing the resulting refractory inorganic oxide carrying the active components with a zeolite in a given ratio; and a method wherein a refractory inorganic oxide and a zeolite are first mixed in a given ratio and molded, followed by depositing the above-described active components on the molded product.

The DeNOx catalysts of this invention are usually used in a desired, molded form, and preferably used as a catalyst structure of a honeycomb type. In this case, there are a method which comprises molding a refractory inorganic oxide into a honeycomb type together with a proper binder and then having the honeycomb structure carry the above-mentioned active components; and a method which comprises having a refractory inorganic oxide carry the active components and then molding the whole into a honeycomb type with the addition of a binder.

However, some refractory inorganic oxides used in this invention such as alumina are sometimes difficult to mold into a honeycomb type. In such a case, a so-called wash-coat method is employed wherein a honeycomb structure made of a ceramic such as cordierite or a metal is immersed in a suspension which contains powder of the above-mentioned refractory inorganic oxide containing the active components to coat the surface of the honeycomb structure with the suspension, followed by drying and calcining to obtain a catalyst structure carrying the desired active components on the surface of a honeycomb structure.

There is no particular restriction on the starting materials for platinum, tellurium and other active components such as alkali metals as long as the starting materials are water-soluble compounds conventionally used. Compounds soluble in an organic solvent can also be used in the invention.

The compound of platinum includes dinitrodiammine platinum, platinum chloride or ammonium chloroplatinate. The compound of tellurium includes telluric acid, sodium tellurate or tellurium chloride.

The compounds of alkali metals and alkaline earth metals include salts of an inorganic acid such as hydroxides and nitrates. The boron compounds include boric acid, halides such as boron chloride and organic boron compounds such as boron alkoxides. The phosphorus compounds include phosphoric acid, hypophosphorous acid and phosphorous acid as well as organic phosphorus compounds such as esters and phosphonium salts thereof. The zinc compounds include salts of an inorganic acid such as zinc nitrate and zinc chloride, salts of an organic acid such as zinc acetate and zinc formate, and organic zinc compounds such as zinc pentadionate. The tungsten compounds include tungstates such as ammonium tungstate and organic tungsten compounds such as tungsten alkoxides. The molybdenum compounds include molybdates such as ammonium molybdate and organic molybdenum compounds such as dioxobis(2,4-pentanedionato)molybdenum. The tin compounds include stannates, tin chloride and organic tin compounds such as tin alkoxides and tetrabutyltin. The cerium compounds include salts of an inorganic acid such as cerium nitrate and salts of an organic acid such as cerium acetate. Further, oxides such as zinc oxide, tin oxide and cerium oxide can also be used.

The zeolite used in this invention includes Y-type, L-type, ZSM-type, moldenite, beta, aluminophosphate or silicoaluminophosphate. In particular, a high-silica zeolite with SiO₂/Al₂O₃ being at least 10 (molar ratio) is preferable from the standpoint of its hydrothermal resistance.

The method for removing nitrogen oxides of this invention removes nitrogen oxides from a nitrogen oxide-containing gas with a reducing agent and by the use of the 1st catalyst, the 2nd catalyst or the 3rd catalyst of this invention.

In this invention, the nitrogen oxide-containing gas and the reducing agent are introduced in a catalyst bed loaded with an appropriate molding containing the above-mentioned catalyst, such as a honeycomb structure, whereby the catalyst helps remove the nitrogen oxides by reduction.

The reducing agents used in this invention include those conventionally used such as ammonia and hydrocarbons, with the hydrocarbons being preferred. The hydrocarbons are preferably the components contained in a diesel fuel, among which liquid hydrocarbons having a boiling point in a range from 160 to 340°C are more preferred. In the case of removing nitrogen oxides from the exhaust gases of a diesel engine, accordingly, the diesel fuel is used as the reducing agent as it is.

In the method for removing nitrogen oxides of this invention, the mixing ratio of the nitrogen oxides and the hydrocarbons is selected from a range of 1 to 50 parts by volume of the hydrocarbons in terms of methane per one part by volume of the nitrogen oxides. When the hydrocarbons are less than 1 part by volume in terms of methane, the hydrocarbons will preferentially react with oxygen in the nitrogen oxide-containing gases (exhaust gases) and thus have fewer chances of reacting with the nitrogen oxides. Even if the hydrocarbons are increased beyond 50 parts by volume, the removal ratio of NOx will not be so improved as to meet the increased amount and there occurs a problem that excess unreacted hydrocarbons must be removed.

The method for removing nitrogen oxides of this invention preferably employs a reaction temperature range of from 200 to 350°C when using hydrocarbons as reducing agent and only using the catalyst of this invention as catalyst.

On the other hand, in the case of purifying exhaust gases from a diesel engine, the exhaust gases change in temperature in a wide range of from 200 to 600°C and, therefore, require a catalyst which has the ability of purifying the exhaust gases in the wide temperature region. The catalyst of this invention however does not have a sufficient DeNOx activity at a high temperature exceeding 350°C.

Thus, especially in the case of purifying the exhaust gases of a diesel engine, the method for removing nitrogen oxides of this invention places a catalyst bed loaded with a catalyst having a sufficient DeNOx activity in a temperature region of 300°C and higher at the upstream side of the catalyst bed loaded with the catalyst of this invention; and first introducing a mixture of a nitrogen oxide-containing gas and hydrocarbons into the former catalyst bed having a high activity in the temperature region of 300°C and higher and then introducing the outlet gas from the upstream catalyst bed into the catalyst bed according to this invention.

By employing the two-stage construction of the catalyst beds as described above, exhaust gases at a temperature of at least 300°C are purified of nitrogen oxides by the high-temperature-active catalyst at the upstream side whereas exhaust gases at a temperature of lower than 300°C are purified of nitrogen oxides mainly by the catalyst of the invention at the downstream side; consequently enabling purification of exhaust gases in a wide temperature range of from 200 to 600°C.

In the above-described method of this invention, the catalyst having a sufficient DeNOx activity at the high temperature of 300°C and higher is not particularly restricted as long as it is a high-temperature-active catalyst conventionally known. The catalyst used, for example, has an active metal such as Ag, Cu, Co, Fe or Zn carried on alumina, silica, silica-alumina, a zeolite or the like.

### Best Mode for Carrying out the Invention

### Example 1

100 g of powdered alumina having a BET surface area of 100 m²/g were incorporated with 200 ml of an aqueous solution containing 2.0 g of dinitrodiammine platinum in terms of Pt, 0.4 g of telluric acid in terms of Te and 0.5 g of boric acid in terms of B. The whole was mixed well and then evaporated to dryness, and calcined at 450°C for 2 hours. The resulting powder was reduced by addition of a hydrazine solution and then dried at 110°C for 2 hours to obtain a platinum-tellurium-boron-on-alumina catalyst.

The powder of the catalyst as obtained above was mixed with an alumina sol (concentration 10% by weight) and further incorporated with pure water to adjust the concentration of the catalyst to 35% by weight, and then wet-pulverized with a ball mill to prepare a slurry for wash coating. In the slurry was immersed a commercially available, cordierite-made honeycomb structure (number of gas-passing cells = 400, diameter = 20 mm, length = 16 mm) and, thereafter, pulled up and freed of excess slurry on the surface thereof by air blowing. Then, the slurry-coated honeycomb structure was dried at 120°C for 2 hours and calcined at 500°C for 3 hours to thereby obtain a catalyst structure A wherein the catalyst was carried in a proportion of 150 g/liter on the surface of the honeycomb structure.

### Example 2

The same procedure as in Example 1 was followed except that 0.5 g of zinc nitrate in terms of Zn were used in place of boric acid, to obtain a catalyst structure B carrying a catalyst in an amount of 150 g/liter.

### Example 3

The same procedure as in Example 1 was followed except that 5.0 g of ammonium paratungstate in terms of W were used in place of boric acid, to obtain a catalyst structure C carrying a catalyst in an amount of 150 g/liter.

### Example 4

The same procedure as in Example 1 was followed except that 0.5 g of phosphoric acid in terms of P were used in place of boric acid, to obtain a catalyst structure D carrying a catalyst in an amount of 150 g/liter.

### Example 5

100 g of powdered alumina having a BET surface area of 100 m²/g were incorporated with 200 ml of an aqueous solution containing 2.0 g of dinitrodiammine platinum in terms of Pt and 0.4 g of telluric acid in terms of Te. The whole was mixed well and then evaporated to dryness, and calcined at 450°C for 2 hours. The resulting powder was reduced by addition of a hydrazine solution and then dried at 110°C for 2 hours. The powder so obtained was fully mixed with a zeolite (H-type ZSM-5, SiO₂/Al₂O₃ = 300 (mole ratio)) in a proportion of powder/zeolite = 90/10 (weight ratio) to obtain a powder of platinum-tellurium-zeolite-on-alumina catalyst.

The same process as in Example 1 was followed, except for using the above-obtained catalyst powder, to obtain a catalyst structure E carrying the catalyst in an amount of 150 g/liter on the surface of a honeycomb structure.

### Example 6

The same procedure as in Example 5 was followed except that H-type ZSM-5 (SiO₂/Al₂O₃ = 40 (mole ratio)) was used in place of H-type ZSM-5 (SiO₂/Al₂O₃ = 300 (mole ratio)), to obtain a catalyst structure F carrying a catalyst in an amount of 150 g/liter.

### Example 7

The platinum-tellurium-boron-on-alumina powdered catalyst as prepared in Example 1 was fully mixed with H-type ZSM-5 (SiO₂/Al₂O₃ = 300 (mole ratio)) in a proportion of powder/zeolite = 90/10 (weight ratio) to obtain a catalyst powder.

The same process as in Example 1 was followed, except for using the above-obtained catalyst powder, to obtain a catalyst structure G carrying the catalyst in an amount of 150 g/liter on the surface of a honeycomb structure.

### Example 8

The same procedure as in Example 1 was followed except that the content of boron was 1.0 % by weight based on the amount of alumina, to obtain a catalyst structure H carrying a catalyst in an amount of 150 g/liter.

### Example 9

The same procedure as in Example 1 was followed except that the content of platinum was 1.0 % by weight and the content of tellurium was 0.6 % by weight each based on the amount of alumina, to obtain a catalyst structure I carrying a catalyst in an amount of 150 g/liter.

### Example 10

The same procedure as in Example 1 was followed except that the content of tellurium was 1.2 % by weight based on the amount of alumina, to obtain a catalyst structure J carrying a catalyst in an amount of 150 g/liter.

### Example 11

The same procedure as in Example 1 was followed except that 0.6 g of ammonium molybdate in terms of Mo were used in place of boric acid, to obtain a catalyst structure K carrying a catalyst in an amount of 150 g/liter.

### Example 12

The same procedure as in Example 1 was followed except that 2.0 g of chloroplatinic acid in terms of Pt were used in place of dinitrodiammine platinum and 0.5 g of tin(II) chloride in terms of Sn were used in place of boric acid, to obtain a catalyst structure L carrying a catalyst in an amount of 150 g/liter.

### Example 13

The same procedure as in Example 1 was followed except that 0.5 g of phosphoric acid in terms of P and 0.5 g of tin(II) chloride in terms of Sn were used in place of boric acid, to obtain a catalyst structure M carrying a catalyst in an amount of 150 g/liter.

### Example 14

100 g of powdered alumina having a BET surface area of 100 m²/g were incorporated with a mixed aqueous solution containing 2.0 g of dinitrodiammine platinum in terms of Pt and 0.4 g of telluric acid in terms of Te. The whole was mixed well and then evaporated to dryness, and calcined at 450°C for 2 hours. The resulting powder was reduced by addition of a hydrazine solution and then dried at 110°C for 2 hours to prepare a platinum-tellurium-on-alumina catalyst.

Using the powder of catalyst obtained above, the same procedure as in Example 1 was followed to obtain a catalyst structure carrying the platinum-tellurium-on-alumina catalyst in an amount of 150 g/liter on the surface of a cordierite-made honeycomb structure. The catalyst structure was then immersed for one hour in an aqueous solution containing sodium nitrate in an amount of 47 g/liter in terms of Na and then dried at 110°C and calcined at 450°C for 5 hours to thereby obtain a catalyst structure N carrying 5.0 g of Na.

### Example 15

The same procedure as in Example 14 was followed except that potassium nitrate was used in place of sodium nitrate, to obtain a catalyst structure O.

### Example 16

The same procedure as in Example 14 was followed except that caesium nitrate was used in place of sodium nitrate, to obtain a catalyst structure P.

### Example 17

The same procedure as in Example 14 was followed except that magnesium nitrate was used in place of sodium nitrate, to obtain a catalyst structure Q.

### Example 18

The same procedure as in Example 14 was followed except that strontium nitrate was used in place of sodium nitrate, to obtain a catalyst structure R.

### Example 19

The same procedure as in Example 14 was followed except that barium nitrate was used in place of sodium nitrate, to obtain a catalyst structure S.

### Example 20

Catalyst structure C as obtained in Example 3 was immersed in a sodium nitrate aqueous solution, dried and calcined by the same procedure as in Example 14, to obtain a catalyst structure T.

### Example 21

The platinum-tellurium-on-alumina catalyst powder as prepared in Example 14 was fully mixed with cerium oxide in a proportion of powder/cerium oxide = 90/10 (weight ratio) to prepare a powder of catalyst carrying platinum, tellurium and cerium oxide on alumina.

With the use of the resulting catalyst powder, the same procedure as in Example 1 was followed to obtain a catalyst structure U carrying the catalyst in an amount of 150 g/liter on the surface of a honeycomb structure.

### Comparative Example 1

100 g of powdered alumina having a BET surface area of 100 m²/g were incorporated with 200 ml of an aqueous solution containing 2.0 g of dinitrodiammine platinum in terms of Pt and 0.4 g of telluric acid in terms of Te. The whole was mixed well, evaporated to dryness and then calcined at 450°C for 2 hours. The resulting powder was reduced by addition of a hydrazine solution and then dried at 110°C for 2 hours to obtain a platinum-tellurium-on-alumina catalyst.

The same process as in Example 1 was followed, except for using the above-obtained catalyst powder, to obtain a catalyst structure V carrying the catalyst in an amount of 150 g/liter on the surface of a honeycomb structure.

### Test Example 1

Each of catalyst structures A to V as obtained in Examples 1 to 21 and Comparative Example 1 was loaded in a reactor and tested for removing nitrogen oxides under the conditions on Table 1.

**Table 1**

| | |
|---|---|
| Reaction gas composition: | NO = 800 ppm, O₂ = 10% |
| | SO₂ = 20 ppm, H₂O = 10% |
| | C₁₁H₂₄= 462 ppm, N₂ = balance |
| Reaction temperature: | 200 to 350°C |
| Space velocity: | 40000 h⁻¹ |

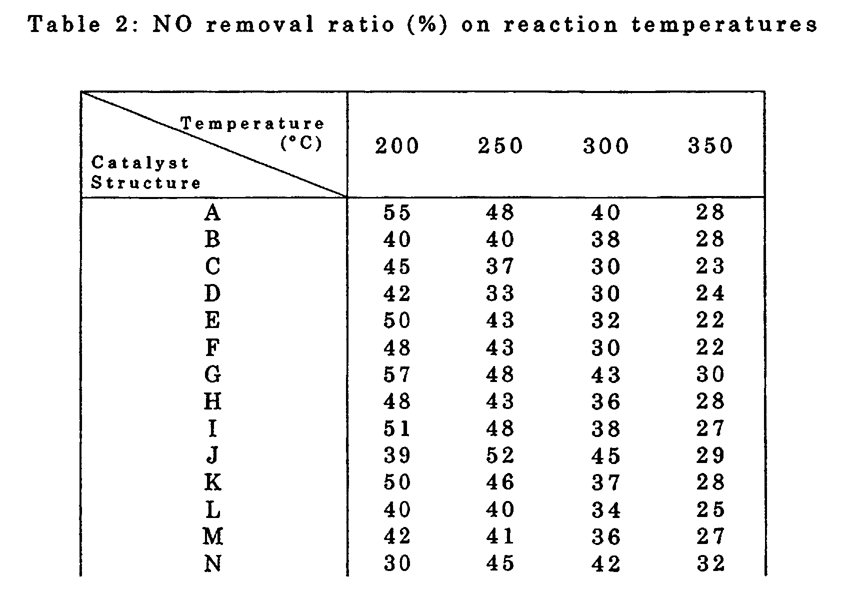

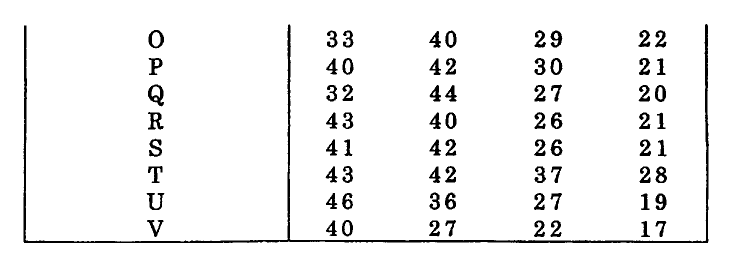

### Example 22

A powdered, Ag/Al₂O₃ catalyst which had the alumina as used in Example 1 carry 5.0% by weight of Ag based on the weight of the alumina, was deposited on the surface of a commercially available, cordierite-made honeycomb structure (number of gas-passing cells = 400, diameter = 20 mm, length = 8 mm) by the same process as in Example 1 to thereby obtain a catalyst structure W carrying the catalyst in an amount of 150 g/liter.

Catalyst structures X, Y and Z were also prepared which were the same as those of Examples 5, 14 and 21 except for the honeycomb structure being 8 mm in length.

### Test Example 2

A nitrogen oxide removal test was conducted under the same conditions as in Test Example 1 except that the same reactor as in Test Example 1 was loaded with catalyst structure W and catalyst structure X as obtained in Example 22 in this order and the reaction temperature was changed up to 500°C. Furthermore, the nitrogen oxide removal test was also made in the same manner on the combination of catalyst structure W and catalyst structure Y and of catalyst structure W and catalyst structure Z. The results are given in Table 3. In this connection, the reaction gas was made to flow through from catalyst structure W in every test.

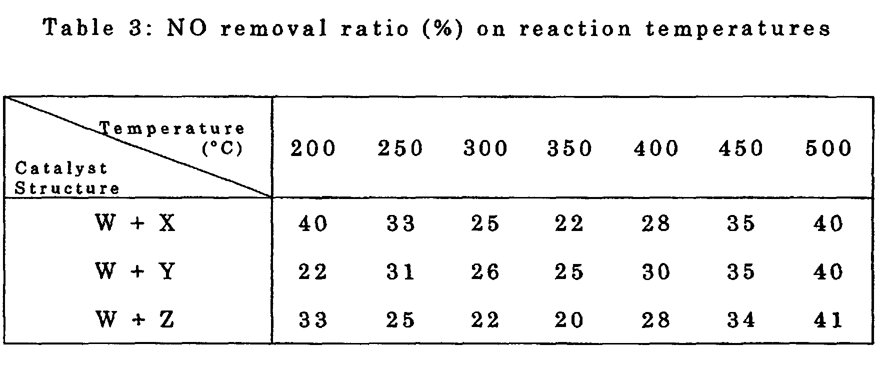

### Industrial Applicability

The catalysts of this invention are obtained by adding tellurium to a conventional platinum-based catalyst which is lowered in DeNOx activity at a reaction temperature of 300°C and higher and further adding thereto a zeolite and/or at least one kind of element selected from alkali metals, alkaline earth metals, boron, zinc, phosphorus, tungsten, molybdenum, tin and cerium. The catalysts are not only improved in DeNOx activity but also able to keep their levels of the activity high at a temperature up to about 350°C.

The catalysts of this invention also have the effect of burning unreacted hydrocarbons.

The method for removing nitrogen oxides of this invention can keep the DeNOx activity high in a wide temperature region of from 200 to 600°C by combining an Ag- or Cu-based catalyst having a high activity at 300°C and higher and any catalyst of this invention.

## Claims

1. A catalyst for removing nitrogen oxides, comprising platinum, tellurium, a refractory inorganic oxide and at least one kind of element selected from alkali metals, alkaline earth metals, boron, phosphorus, zinc, tungsten, molybdenum, tin and cerium.

2. A catalyst for removing nitrogen oxides comprising platinum, tellurium, a refractory inorganic oxide and a zeolite.

3. A catalyst for removing nitrogen oxides comprising platinum, tellurium, a refractory inorganic oxide, a zeolite and at least one kind of element selected from alkali metals, alkaline earth metals, boron, phosphorus, zinc, tungsten, molybdenum, tin and cerium.

4. The catalyst for removing nitrogen oxides according to any one of claim 1 to 3 wherein the content of platinum is from 0.1 to 5% by weight based on the content of said refractory inorganic oxide and the content of tellurium is from 0.05 to 5% by weight based on the content of said refractory inorganic oxide.

5. The catalyst for removing nitrogen oxides according to claim 1 or 3 wherein the total content of said at least one kind of element selected from alkali metals, alkaline earth metals, boron, phosphorus, zinc, tungsten, molybdenum, tin and cerium is from 0.1 to 40% by weight based on the content of said refractory inorganic oxide.

6. The catalyst for removing nitrogen oxides according to claim 2 or 3 wherein the content of said zeolite is from 1 to 50% by weight based on the total amount of the catalyst.

7. A method for removing nitrogen oxides, comprising introducing a nitrogen oxide-containing gas and a reducing agent into a catalyst bed loaded with the catalyst according to any of claims 1 to 6.

8. A method for removing nitrogen oxides, comprising providing upstream of a catalyst bed loaded with the catalyst according to any of claims 1 to 6, a catalyst bed loaded with a catalyst having a nitrogen oxide-removing activity higher than the former catalyst at a temperature of not less than 300°C; and flowing a nitrogen oxide-containing gas and a reducing agent through from the upstream catalyst bed to the downstream catalyst bed.
